(19)

Europäisches
Patentamt
European
Patent Office
Office européen
des brevets

(11) **EP 2 985 880 A1**

(12) **EUROPEAN PATENT APPLICATION**
published in accordance with Art. 153(4) EPC

(43) Date of publication:
**17.02.2016 Bulletin 2016/07**

(21) Application number: **14779209.7**

(22) Date of filing: **14.02.2014**

(51) Int Cl.:
**H02J 50/00** *(2016.01)*   **H01F 38/14** *(2006.01)*

(86) International application number:
**PCT/JP2014/053456**

(87) International publication number:
**WO 2014/162781 (09.10.2014 Gazette 2014/41)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **01.04.2013 JP 2013075781**

(71) Applicant: **Nitto Denko Corporation
Ibaraki-shi, Osaka 567-8680 (JP)**

(72) Inventors:
• **HATANAKA, Takezo
Ibaraki-shi
Osaka 567-8680 (JP)**
• **TSUDA, Hisashi
Ibaraki-shi
Osaka 567-8680 (JP)**

(74) Representative: **Müller-Boré & Partner
Patentanwälte PartG mbB
Friedenheimer Brücke 21
80639 München (DE)**

(54) **POWER-RECEIVING DEVICE**

(57)     Transmission efficiency is increased or decreased by a simple arrangement.

A power-receiving resonance coil 111 to which power is supplied by a resonance phenomenon of resonance with a power-supplying module 21, a power-receiving coil 112 which receives the power from the power-receiving resonance coil 111, and a magnetic member 17 which at least in part overlaps the power-receiving resonance coil 111 in a radial direction in order to increase or decrease magnetic coupling in resonance are provided.

FIG.1

**Description**

[Technical Field]

The present invention relates to a power-receiving device configured to receive power in a contactless manner.

[Background]

Portable electronic devices such as note PCs, tablet Pcs, digital cameras, and mobile phones have rapidly become popular. Many of such electronic devices have rechargeable batteries which require regular charging. To simplify the charging of a rechargeable battery in an electronic device, a growing number of devices charge the rechargeable battery by a power supplying technology employing wireless power transmission between a power-supplying device and a power-receiving device mounted in the electronic device (a wireless power transmission technology of power transmission by varying a magnetic field) .

Examples of the wireless power transmission technology include power transmission by utilizing electromagnetic induction between coils (see e.g., PTL 1) and power transmission by magnetic field coupling utilizing a resonance phenomenon between resonators (coils) of the power-supplying device and the power-receiving device (see e.g., PTL 2).

In such a wireless power transmission technology, large transmission loss occurs in wireless transmission as compared to power transmission through a wire. For this reason, reduction of such transmission loss and improvement in the transmission efficiency (i.e., a ratio of the power received by the power-receiving device to the power sent by the power-supplying device) have been a big problem.

To resolve this problem, for example, PTL 2 discloses a wireless power transmission apparatus which improves the transmission efficiency of power from a power-supplying device to a power-receiving device even if the distance between a power-supplying resonance coil and a power-receiving resonance coil is changed, by changing the resonance frequency of the power-supplying resonance coil and the resonance frequency of the power-receiving resonance coil to accordingly change the coupling strength between the power-supplying resonance coil and the power-receiving resonance coil so as to maintain the resonance state. In the meanwhile, PTL 3 discloses a wireless power device which improves the entire transmission efficiency by changing the coupling strength between a power-supplying coil and a power-receiving coil. Furthermore, PTL 4 discloses a power-supplying system which is provided with a power-supplying resonance coil and a power-receiving resonance coil between a power-supplying coil and a power-receiving coil, detects the distance c between the power-supplying resonance coil and the power-receiving resonance coil when power is supplied in a contactless manner, and variably adjusts the distance a between the power-supplying coil and the power-supplying resonance coil and the distance b between the power-receiving coil and the power-receiving resonance coil to maximize the power supply efficiency at the distance c.

[Citation List]

[Patent Literatures]

[PTL 1] Japanese Patent No. 4624768
[PTL 2] Japanese Unexamined Patent Publication No. 2010-239769
[PTL 3] Japanese Unexamined Patent Publication No. 2010-239777
[PTL 4] Japanese Unexamined Patent Publication No. 2010-124522

[Summary of Invention]

[Technical Problem]

The transmission efficiency is actually improved by the technologies above. However, the technologies above are disadvantageous in that a control device for changing the resonance frequency, a control device for changing the coupling strength between two resonators, and a control device for adjusting the distance between the power-supplying coil and the power-supplying resonance coil and the distance between the power-receiving coil and the power-receiving resonance coil are required, and hence the structure is complicated and the cost is high.

An object of the present invention is therefore to provide a power-receiving device which is able to increase or decrease transmission efficiency by a simple structure, without using a control device for changing a resonance frequency, a control device for changing the coupling strength between two resonators, and a control device for adjusting the distance between a power-supplying coil and a power-supplying resonance coil and the distance between a power-receiving coil and a power-receiving resonance coil as in the known arrangements.

[Solution to Problem]

The present invention relates to a power-receiving device including: a power-receiving resonance coil which receives power by a resonance phenomenon of resonance with a power-supplying module; a power-receiving coil configured to receive the power from the power-receiving resonance coil; and a magnetic member which at least in part overlaps the power-receiving resonance coil in a radial direction in order to increase or decrease magnetic coupling in the resonance.

With this arrangement, because the magnetic member increases or decreases the magnetic coupling between the power-receiving resonance coil and the power-supplying module in the resonance, the magnetic coupling is easily adjusted as compared to cases where the magnetic coupling is increased or decreased by changing the distance between the power-supplying module and the power-receiving resonance coil. As a result, even if the distance between the power-supplying module and the power-receiving resonance coil is not changeable because, for example, the sizes and shapes of the power-supplying module and the power-receiving resonance coil are structurally unchangeable, the requirements for the power-receiving device in transmission efficiency of the power supply are easily satisfied by increasing or decreasing the degree of the magnetic coupling by the magnetic member, and hence charging in a short time becomes possible and overheating on account of quick charging is prevented.

The magnetic member of the present invention may be provided on an inner circumference side of the power-receiving resonance coil.

This arrangement improves the magnetic coupling between the power-receiving resonance coil and the power-supplying module in the resonance.

The power-receiving device of the present invention may be arrangement such that the power-receiving resonance coil has a coil diameter which is identical with a coil diameter of the power-supplying module and is disposed to oppose the power-supplying module, and the magnetic member is cylindrical in shape and extends along the inner circumferential surface of the power-receiving resonance coil, and a one-end position on the power-supplying module side of the power-receiving resonance coil corresponds to a one-end position of the power-supplying module in a coil axis direction.

This arrangement further improves the magnetic coupling between the power-receiving resonance coil and the power-supplying module in the resonance by the cylindrical magnetic member which is provided along the inner circumferential surface of the power-receiving resonance coil.

The power-receiving device of the present invention may be arranged such that the power-receiving resonance coil has a coil diameter identical with a coil diameter of the power-supplying module and is provided to oppose the power-supplying module, the power-receiving coil is provided on a side opposite to the power-supplying module to have a coil axis corresponding to a coil axis of the power-receiving resonance coil, and the magnetic member is formed to have a cylindrical shape along inner circumferential surfaces of the power-receiving resonance coil and the power-receiving coil, a one-end position on the power-supplying module side of the power-receiving resonance coil corresponds to a one-end position of the power-receiving resonance coil in a coil axis direction, and the magnetic member includes: an inner cylindrical portion in which an other-end position which is on a side opposite to the power-supplying module corresponds to an other-end position of the power-receiving coil in the coil axis direction; and a disc portion which is provided at the other end of the cylindrical portion to oppose an other-end face of the power-receiving coil.

This arrangement further improves the magnetic coupling between the power-receiving resonance coil and the power-supplying module in the resonance by the magnetic member formed of the cylindrical inner cylindrical portion provided along the inner circumferential surface of the power-receiving resonance coil and the disc portion disposed to oppose the power-receiving coil.

In the present invention, to the power-receiving resonance coil, the power may be supplied by the resonance phenomenon in which a transmission characteristic of the power supplied to the power-supplying module with respect to a drive frequency is peaked in a drive frequency band lower than a resonance frequency and in a drive frequency band higher than the resonance frequency.

With this arrangement, the location where the magnetic field space appears is changed between a case where, at the peak frequency in the low drive frequency band, the direction of the current flowing in the power-supplying module is arranged to be identical with the direction of the current flowing in the power-receiving resonance coil are identical (in-phase) and a case where the directions of the currents are arranged to be opposite (reversed-phase), with the result that the degree of freedom in the arrangement of the components is increased.

The power-receiving device of the present invention may further include an electronic component which is provided in a magnetic field space formed by the resonance phenomenon to have a lower magnetic field strength than in other parts.

According to the arrangement above, because the power-receiving resonance coil to which the power is supplied by the resonance phenomenon is provided in the power-receiving device, a space having a small magnetic field is generated at or around the inner side of the power-receiving module at the time of the power supply, and this space is effectively utilized as a space where the electronic component is provided. This makes it possible to easily secure the space where the electronic component is provided even in devices such as portable devices in which it is typically difficult to secure a space for the electronic component, and this allows the power-receiving device to contribute to the downsizing of the devices.

[Advantageous Effects of Invention]

Transmission efficiency is improved by a simple arrangement.

[Brief Description of Drawings]

[FIG. 1] FIG. 1 is a schematic explanatory diagram of a power-supplying system including a power-receiving device in accordance with the present invention.
[FIG. 2] FIG. 2 illustrates how a coupling coefficient is measured.
[FIG. 3] FIG. 3 illustrates the relationship between a magnetic member and the coupling coefficient.

[Description of Embodiments]

The following will describe an embodiment of a power-receiving device.

(Power-Receiving Device 1: Outline)

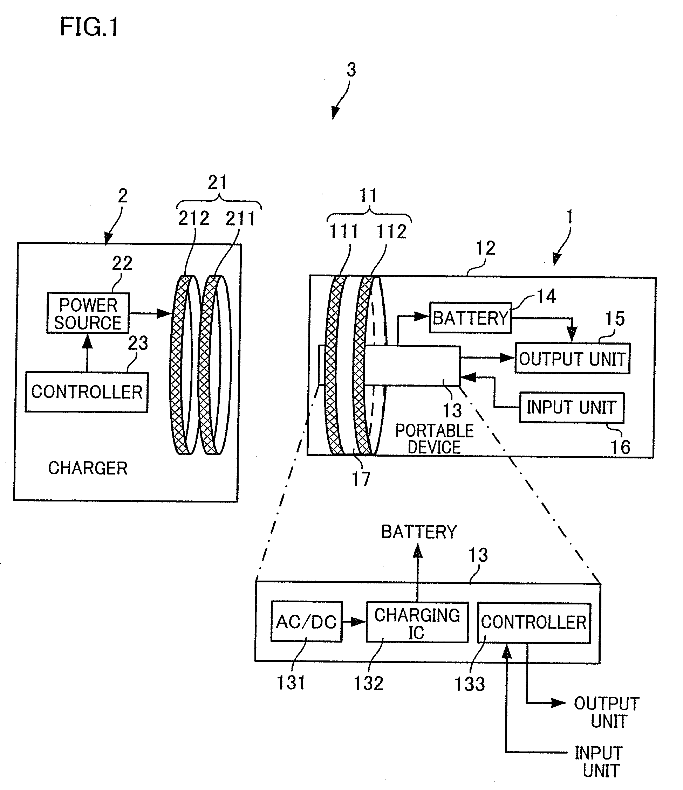

As shown in FIG. 1, a power-receiving device 1 includes a magnetic member 17 which is provided in a power-receiving module 11 to increase or decrease the magnetic coupling in resonance. With this, as the magnetic member 17 increases or decreases the magnetic coupling between the power-receiving module 11 and the power-supplying module 21 in resonance, the power-receiving device 1 is able to easily satisfy the requirement in transmission efficiency in power supply for the power-receiving device 1 even if the distance between the power-supplying module 21 and the power-receiving module 11 cannot be changed, e.g., when the sizes and shapes of the power-receiving device 1 and the power-supplying device 2 are structurally unchangeable, and hence charging in a short time becomes possible and overheating on account of quick charging is prevented.

Furthermore, a power-receiving device 1 is arranged to generate a magnetic field space having a small magnetic field at or around the inner side of a power-receiving module 11 by utilizing a resonance phenomenon, and an electronic component 13 is provided in this magnetic field space. With this, the power-receiving device 1 can be downsized because malfunction and generation of heat equal to or higher than a predetermined temperature are prevented as the generation of an Eddy current by a magnetic field at the electronic component 13 provided in the above-described magnetic field space is restrained.

To be more specific, the power-receiving device 1 includes a power-receiving resonance coil 111 which receives power by a resonance phenomenon with which the power-receiving resonance coil 111 is in resonance with a power-supplying module 21, a power-receiving coil 112 which receives power from the power-receiving resonance coil 111, and a magnetic member 17 which overlaps at least in part the power-receiving resonance coil 111 in a radial direction in order to improve the magnetic coupling in resonance. Furthermore, the power-receiving device 1 includes an electronic component 13 which is provided in the magnetic field space formed by the resonance phenomenon to have a lower magnetic field strength than the other parts.

The power-supplying module 21 includes a power-supplying resonance coil 211 which resonates with the power-receiving resonance coil 111 to supply power to the power-receiving module 11 by the resonance phenomenon and a power-supplying coil 212 which supplies power to the power-supplying resonance coil 211. The power-receiving resonance coil 111 and the power-receiving coil 112 of the power-receiving module 11 and the power-receiving resonance coil 111 and the power-receiving coil 112 of the power-supplying module 21 are formed by spiral, solenoid, or loop coils (made of a copper wire material coated with an insulation film). The resonance phenomenon indicates that two or more coils are in sync with one another at a resonance frequency.

The power-receiving device 1 is any types of apparatuses that operate based on power supply. For example, the power-receiving device 1 may be a portable device, a non-portable device, and vehicles such as a car. The portable device encompasses all types of handheld devices and wearable devices (devices attached to a human body).

Specific examples of the portable device include a portable computer (a laptop PC, a note PC, a tablet PC, or the like), a camera, an audio visual device (a mobile music player, an IC recorder, a portable DVD player, or the like), a calculator (such as a pocket computer and an electronic calculator), a game console, a computer peripheral (a portable printer, a portable scanner, a portable modem, or the like), a dedicated information device (an electronic dictionary, an electronic notebook, an electronic book, a portable data terminal, or the like), a mobile communication terminal, a voice communication terminal (a mobile phone, a PHS, a satellite phone, a third party radio system, an amateur radio, a specified low power radio, a personal radio, a citizen radio, or the like), a data communication terminal (a mobile phone, a PHS (a feature phone and a smart phone), a pager, or the like), a broadcasting receiver (a television receiver and a radio), a portable radio, a portable television receiver, a 1seg receiver, another type of device (a wristwatch and a pocket watch), a hearing aid, a handheld GPS, a security buzzer, a flashlight/pen light, a battery pack, and an extracorporeal device (such as a sound processor and an audio processor) of an intracochlea implant system.

(Power-Receiving Device 1: Magnetic Member 17)

The magnetic member 17 is made of a magnetic material. Examples of the magnetic material include soft magnetic materials such as pure Fe, Fe-Si, Fe-Al-Si (sendust), Fe-Ni (permalloy), soft ferrites, Fe-base amorphous, Co-base amorphous, and Fe-Co (permendur).

The magnetic member 17 may be made of resin in which magnetic powder of the above-described magnetic material is dispersed. The resin may be thermosetting resin or thermoplastic resin. Examples of the thermosetting resin include epoxy resin, phenol resin, melamine resin, vinyl ester resin, cyano ester resin, maleimide resin, and silicon resin. Examples of the thermoplastic resin include acrylic resin, vinyl acetate based resin, and poly vinyl alcohol based resin.

The magnetic member 17 is provided at least on the inner circumference side of the power-receiving resonance coil 111. The magnetic member 17 provided on the inner circumference side of the power-receiving resonance coil 111 enhances (increases) the magnetic coupling between the power-receiving resonance coil 111 and the power-supplying module 21 (power-supplying resonance coil 211) in resonance.

To enhance the magnetic coupling, the magnetic member 17 is preferably disposed as below when the power-receiving resonance coil 111 has the same coil diameter as the power-supplying module 21 and is disposed to oppose the power-supplying module 21.

That is to say, preferably, the magnetic member 17 is cylindrical in shape and extends along the inner circumferential surface of the power-receiving resonance coil 111, and the position of one end on the power-supplying module 21 side of the power-receiving resonance coil 111 is identical in the coil axis direction with the position of one end of the power-receiving module 11. With this arrangement, the cylindrical magnetic member 17 extending along the inner circumferential surface of the power-receiving resonance coil 111 enhances the magnetic coupling between the power-receiving resonance coil 111 and the power-supplying module 21 in resonance, and the magnetic field space is enlarged to reach the inner side of the power-receiving resonance coil 111.

In addition to the above, to enhance the magnetic coupling, the magnetic member 17 is preferably disposed as below when the power-receiving resonance coil 111 has the same coil diameter as the power-supplying module 21 and is disposed to oppose the power-supplying module 21 and the power-receiving coil 112 is provided on the side opposite to the power-supplying module 21 to have the same coil axis as the power-receiving resonance coil 111.

That is to say, the magnetic member 17 preferably includes a cylindrical portion which is formed to be cylindrical in shape and extend along the inner circumferential surfaces of the power-receiving resonance coil 111 and the power-receiving coil 112 and is arranged such that the position of one end on the power-supplying module 21 side of the cylindrical portion is identical with the position of one end of the power-receiving resonance coil 111 in the coil axis direction) and the position of the other end of the cylindrical portion on the side opposite to the power-supplying module 21 side is identical with the position of the other end of the power-receiving coil 112 in the coil axis direction, and a disc-shaped portion which is provided at the other end of the cylindrical portion to oppose the other end face of the power-receiving coil 112. With this arrangement, the magnetic member 17 having the cylindrical portion which is cylindrical in shape and extends along the inner circumferential surface of the power-receiving resonance coil 111 and the disc-shaped portion disposed to oppose the power-receiving coil 112 further enhances the magnetic coupling between the power-receiving resonance coil 111 and the power-supplying module 21 (power-supplying resonance coil 211) in resonance, and the magnetic field space is enlarged to reach the inner side of the power-receiving resonance coil.

While in the present embodiment the magnetic member 17 is formed to be cylindrical in shape, the magnetic member is not limited to this shape and may be a dot or a stick in shape. Furthermore, while in the present embodiment the magnetic member 17 is disposed to enhance the magnetic coupling in resonance, the magnetic member 17 may be disposed to lower the magnetic coupling in resonance.

To be more specific, the magnetic member 17 may be arranged to be cylindrical in shape and extend along the outer circumferential surfaces of the power-receiving resonance coil 111 and the power-receiving coil 112, and include an external cylindrical portion in which the position of one end on the power-supplying module 21 side of the cylindrical potion is identical with the position of one end of the power-receiving resonance coil 111 in the coil axis direction, and the position of the other end of the cylindrical portion on the side opposite to the power-supplying module 21 side is identical with the position of the other end of the power-receiving coil 112 in the coil axis direction. With this arrangement, the degree (coupling coefficient) of the magnetic coupling can be lowered.

As such, the power-receiving device 1 may be arranged such that the degree (coupling coefficient) of the magnetic coupling is arbitrarily changeable by adjusting magnetic member conditions such as the position, shape, and size of the magnetic member 17. With this, the power-receiving device 1 is able to easily and arbitrarily change the degree of the magnetic coupling by adjusting the magnetic member conditions of the magnetic member 17, while maintaining the distance between the power-supplying module 21 and the power-receiving module 11 to be constant. For this reason, even if the distance between the power-supplying device 2 (power-supplying resonance coil 211) and the power-receiving device 1 (power-receiving resonance coil 111) is not changeable because, for example, the sizes and shapes of the power-receiving device 1 and the power-supplying device 2 are structurally unchangeable, the requirements for the power-receiving device 1 in transmission efficiency of the power supply are easily satisfied by increasing or decreasing the degree of the magnetic coupling by the magnetic member 17, and hence charging in a short time becomes possible and overheating on account of quick charging is prevented.

(Power-Receiving Device 1: Electronic Component 13 or the Like)

The above-described power-receiving device 1 includes at least one electronic component 13 including an electronic circuit and a battery 14 supplying power for operation. The power-receiving device 1 further includes an output unit 15 such as a speaker, a light emitting member, and an indicator and an input unit 16 such as a microphone and a switch. To be more specific, the power-receiving device 1 includes electronic components 13 such as an AC/DC converter 131a, a charging unit 132, and a controller 133. At least one of these electronic components 13 is provided in the magnetic field space which is formed by the resonance phenomenon to have a lower magnetic field strength than the other parts.

The AC/DC converter 131 has a function of converting AC power supplied to the power-receiving module 11 into DC power. The charging unit 132 has a function of charging the battery 14. The controller 133 is connected to the output unit 15 and the input unit 16 and has a function of outputting a control signal to the output unit 15, a function of receiving an input signal from the input unit 16, and a function of processing different types of information and data corresponding to the use of the power-receiving device 1. While in the present embodiment the battery 14, the output unit 15, and the input unit 16 are recited to be independent from the electronic component 13 for the sake of convenience, the electronic component 13 may include the battery 14, the output unit 15, and the input unit 16. In other words, the battery 14, the output unit 15, and the input unit 16 may be provided in the magnetic field space.

The battery 14 charged by the charging unit 132 is constituted by a rechargeable secondary battery. Examples of the battery 14 include a lead storage battery, a lithium ion secondary battery, lithium ion polymer secondary battery, a nickel hydrogen storage battery, a nickel cadmium storage battery, a nickel iron storage battery, a nickel $Z_{in}$c storage battery, and a silver oxide $Z_{in}$c storage battery. The battery 14 may not be a secondary battery but a capacitor.

(Power-Supplying Device 2)

The power-receiving device 1 arranged as above and the power-supplying device 2 constitute a power-supplying system 3. The power-supplying device 2 includes a power-supplying module 21 which supplies power to the power-receiving module 11 of the power-receiving device 1 by the resonance phenomenon. The power-supplying module 21 includes a power-supplying resonance coil 211 and a power-supplying coil 212. The power-supplying device 2 includes a power source unit 22 supplying AC power to the power-supplying module 21 and a controller 23 controlling the power source unit 22.

(Magnetic Field Space)

Now, the magnetic field space which is mainly used as a place where the electronic component 13 of the power-receiving device 1 is provided will be detailed.

The power-receiving device 1 is arranged so that a magnetic field space is formed at a desired position. The formation of the magnetic field space at the desired position is realized by setting power supply conditions such as a positional relation with the power-supplying device 2, a power-supplying state, and an internal structure. Furthermore, the formation of the magnetic field space at the desired position is realized by setting magnetic member conditions by which the coupling coefficient of the power-supplying resonance coil 211 of the power-supplying module 21 and the power-receiving resonance coil 111 of the power-receiving module 11 can be increased or decreased.

For example, the power-receiving device 1 may be arranged such that, when power is supplied by the resonance phenomenon from the power-supplying resonance coil 211 of the power-supplying module 21 of the power-supplying device 2 to the power-receiving resonance coil 111 of the power-receiving module 11, at a desired position between the powder-supplying resonance coil 211 of the power-supplying module 21 and the power-receiving resonance coil 111 of the power-receiving module 11, a magnetic field space having a magnetic field strength lower than the magnetic field strengths in parts other than the desired position is formed. With this arrangement, a magnetic field space is formed in the vicinity of the power-receiving module 11 on the power-supplying device 2 side.

A method of forming a magnetic field space will be detailed. When power is supplied from the power-supplying resonance coil 211 of the power-supplying module 21 of the power-supplying device 2 to the power-receiving resonance coil 111 of the power-receiving module 11 of the power-receiving device 1 by the resonance phenomenon, for example, the frequency of the power supplied to the power-supplying resonance coil 211 of the power-supplying module 21 is set in such a way that the direction of the current flowing in the power-supplying resonance coil 211 of the power-supplying module 21 is opposite to the direction of the current flowing in the power-receiving resonance coil 111 of the power-receiving module 11.

In the formation method above, when power transmission using the resonance phenomenon is performed, the coupling coefficient indicating the strength of the coupling between the power-supplying resonance coil 211 and the power-receiving resonance coil 111 is increased as the power-supplying resonance coil 211 of the power-supplying module 21 and the power-receiving resonance coil 111 of the power-receiving module 11 are disposed to be close to each other. When the coupling coefficient is high in this manner, the measurement of a transmission characteristic (which is either a value used as an index of power transmission efficiency when power is supplied from the power-supplying coil 212 to the power-receiving coil 112 or a value used as an index of power transmission efficiency when power is supplied from the power-supplying module 21 to the power-receiving module 11) shows that a measured waveform has two separated peaks on the low frequency side and the high frequency side, respectively. As the frequency of the power supplied to the power-supplying resonance coil 211 is set at a frequency around the peak on the high frequency side, the direction of the current flowing in the power-supplying resonance coil 211 is arranged to be opposite to the direction of the current flowing in the power-receiving resonance coil 111, and hence the magnetic field generated on the inner circumference side of the power-supplying resonance coil 211 and the magnetic field generated on the inner circumference side of the power-receiving resonance coil 111 cancel each other out, with the result that an influence of the magnetic field is reduced on the inner circumference sides of the power-supplying resonance coil 211 and the power-receiving resonance coil 111. With this, a magnetic field space having a magnetic field strength lower than the magnetic field strengths in parts other than the inner circumference sides of the power-supplying resonance coil 211 and the power-receiving resonance coil 111 is formed.

In another method of forming a magnetic field space, for example, when power is supplied from the power-supplying resonance coil 211 to the power-receiving resonance coil 111 by the resonance phenomenon, the frequency of the power supplied to the power-supplying resonance coil 211 is set so that the direction of the current flowing in the power-supplying resonance coil 211 is identical with the direction of the current flowing in the power-receiving resonance coil 111.

According to the method above, when power transmission using the resonance phenomenon is performed, the coupling coefficient indicating the strength of the coupling between the power-supplying resonance coil 211 and the power-receiving resonance coil 111 is increased as the power-supplying resonance coil 211 and the power-receiving resonance coil 111 are disposed to be close to each other. When the coupling coefficient is high in this manner, the measurement of the transmission characteristic shows that a measured waveform has two separated peaks on the low frequency side and the high frequency side, respectively. As the frequency of the power supplied to the power-supplying resonance coil 211 is set at a frequency around the peak on the low frequency side, the direction of the current flowing in the power-supplying resonance coil 211 is arranged to be identical with the direction of the current flowing in the power-receiving resonance coil 111, and hence the magnetic field generated on the outer circumference side of the power-supplying resonance coil 211 and the magnetic field generated on the outer circumference side of the power-receiving resonance coil 111 cancel each other out, with the result that an influence of the magnetic field is reduced on the outer circumference sides of the power-supplying resonance coil 211 and the power-receiving resonance coil 111. With this, a magnetic field space having a magnetic field strength lower than the magnetic field strengths in parts other than the outer circumference sides of the power-supplying resonance coil 211 and the power-receiving resonance coil 111 is formed.

In addition to the above, the size of the magnetic field space may be set based on the strength of the magnetic coupling between the power-supplying resonance coil 211 and the power-receiving resonance coil 111, by changing adjustment parameters regarding the power-supplying resonance coil 211 and the power-receiving resonance coil 111. For example, the size of the magnetic field space is increased by relatively weakening the magnetic coupling between the power-supplying resonance coil 211 and the power-receiving resonance coil 111. In the meanwhile, the size of the magnetic field space is decreased by relatively strengthening the magnetic coupling between the power-supplying resonance coil 211 and the power-receiving resonance coil 111. As such, a magnetic field space optimum for the size of the power-receiving device 1 is formed.

Alternatively, the size of the magnetic field space may be changed in such a way that the arrangement relation of the power-supplying resonance coil 211 and the arrangement relation of the power-receiving resonance coil 111 are used as the adjustment parameters, and the adjustment parameters are changed to change the strength of the magnetic coupling between the power-supplying resonance coil 211 and the power-receiving resonance coil 111.

Furthermore, the shape of the magnetic field space may be arranged to be a desired shape in such a way that the shapes of the power-supplying resonance coil 211 and the power-receiving resonance coil 111 are used as the adjustment parameters, and the shapes of these coils are changed in a desirable manner to change the strength of the magnetic coupling between and around the power-supplying resonance coil 211 and the power-receiving resonance coil 111. In this case, as the power-supplying resonance coil 211 and the power-receiving resonance coil 111 are arranged to have desired shapes, a magnetic field space having a relatively low magnetic field strength is formed with a desired shape corresponding to the shapes of the coils.

In addition to the above, the size of the magnetic field space may be set in such a way that at least one of the first distance between the power-supplying resonance coil 211 and the power-supplying coil 212 and the second distance between the power-receiving coil 112 and the power-receiving resonance coil 111 is used as an adjustment parameter, and the size is set based on this adjustment parameter. For example, the size of the magnetic field space is increased in such a way that the first distance between the power-supplying resonance coil 211 and the power-supplying coil 212 and the second distance between the power-receiving coil 112 and the power-receiving resonance coil 111 are relatively shortened so that the magnetic coupling is relatively weakened. In the meanwhile, the size of the magnetic field space is decreased in such a way that the first distance between the power-supplying resonance coil 211 and the power-supplying coil 212 and the second distance between the power-receiving coil 112 and the power-receiving resonance coil 111 are relatively elongated so that the magnetic coupling is relatively strengthened.

The magnetic field space may be formed in such a way that, in the power-receiving resonance coil, power is supplied by a resonance phenomenon having peaks at a drive frequency band in which the value of the transmission characteristic with respect to the drive frequency of the power supplied to the power-supplying module 21 is lower than the resonance frequency and at a drive frequency band in which the value is higher than the resonance frequency. In this connection, the location where the magnetic field space appears is changed between a case where, at the peak frequency in the low drive frequency band, the direction of the current flowing in the power-supplying resonance coil 211 of the power-supplying module 21 is arranged to be identical with the direction of the current flowing in the power-receiving resonance coil 111 are identical (in-phase) and a case where the directions of the currents are arranged to be opposite (reversed-phase).

In addition to the above, the magnetic field space may be formed at a desired position with a magnetic field strength lower than the magnetic field strengths in parts other than the desired position, in such a manner that, the magnetic member 17 is provided to cover at least a part of the power-receiving resonance coil 111 and the power-supplying resonance coil 211 except the surfaces where these coils oppose each other, and power transmission is carried out by changing the magnetic field between the power-supplying resonance coil 211 and the power-receiving resonance coil 111.

The magnetic member 17 may be provided to cover the inner circumferential surface of the power-receiving resonance coil 111. In this case, by blocking the magnetic field generated on the inner circumference side of the power-receiving resonance coil 111, a magnetic field space having a relatively low magnetic field strength is formed on the inner circumference side of the power-receiving resonance coil 111.

In addition to the above, the magnetic member 17 may be provided to cover the surfaces of the power-supplying resonance coil 211 and the power-receiving resonance coil 111, which surfaces are opposite to the surfaces where the coils oppose each other. In this case, by blocking the magnetic field generated at around the surface opposite to the opposing surface of the power-receiving resonance coil 111, a magnetic field space having a relatively low magnetic field strength is formed at around the surface opposite to the opposing surface of the power-receiving resonance coil 111.

As such, the power-receiving device 1 is arranged such that, based on a combination of at least one of the above-described methods of forming the magnetic field space, a magnetic field space having a low magnetic field strength can be intentionally formed at will at and around the inner side of the power-receiving module 11, and the size and shape of the magnetic field space can be arbitrarily set. In other words, in the power-receiving device 1, a desired magnetic field space can be formed by adjusting at least one of the layout of the power-receiving module 11 and the magnetic member conditions.

(Measurement of Coupling Coefficient)

A coupling coefficient $k_{23}$ between the power-supplying resonance coil 211 of the power-supplying module 21 and the power-receiving resonance coil 111 of the power-receiving module 11 in the power-receiving device 1 described above was measured while different types of the magnetic member 17 were used.

(Coupling Coefficient Measurement System)

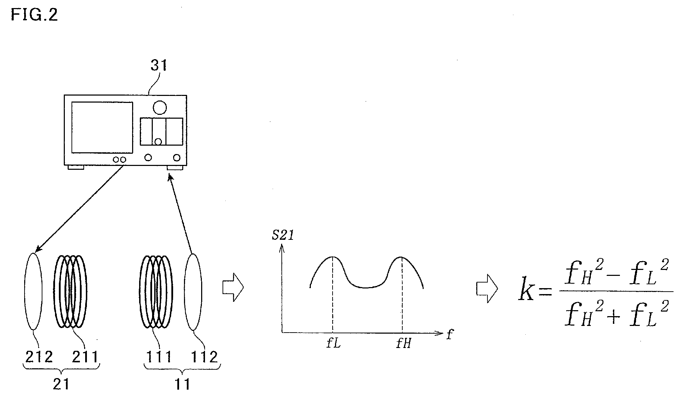

To begin with, as shown in FIG. 2, an output terminal of a network analyzer 31 (made by Agilent Technologies, Inc.) is connected with the power-supplying coil 212 in place of the AC power source. Furthermore, an input terminal of the network analyzer 31 is connected with the power-receiving coil 112 in place of the power supplying/receiving unit.

The network analyzer 31 is able to output AC power at any frequency from the output terminal to the power-supplying coil 212. Furthermore, the network analyzer 31 is able to measure power input to the input terminal from the power-receiving coil 112. Furthermore, the network analyzer 31 is able to measure insertion loss "S21", a coupling coefficient, and power transmission efficiency.

The power-supplying coil 212 has a function of supplying the power obtained from the network analyzer 31 to the power-supplying resonance coil 211 by means of electromagnetic induction. The power-supplying coil 212 is formed by winding a copper wire material (coated by an insulation film) with the wire diameter of 0.4mm$\phi$ once, and is 11mm$\phi$ in coil diameter. The power-supplying resonance coil 211 is formed of a copper wire material (coated by an insulation film) with the wire diameter of 0.4mm$\phi$, and is 11mm$\phi$ in coil diameter and 10mm in coil length. The power-supplying resonance coil 211 is arranged such that a magnetic member which is 450$\mu$m thick is provided on the inner circumference side and the self inductance L is 10.9$\mu$H whereas the resistance value is 1.8$\Omega$.

The power-receiving coil 112 has a function of outputting, to the input terminal of the network analyzer 31, the power having been sent from the power-supplying resonance coil 211 to the power-receiving resonance coil 111 in the form of magnetic field energy, by means of electromagnetic induction. The power-receiving coil 112 is formed by winding a copper wire material (coated by an insulation film) with the wire diameter of 0.4mm$\phi$ once, and is 11mm$\phi$ in coil diameter. The power-receiving resonance coil 111 is formed of a copper wire material (coated by an insulation film) with the wire diameter of 0.2mm$\phi$, and is 11mm$\phi$ in coil diameter and 1.4mm in coil length.

The power-supplying resonance coil 211 and the power-receiving resonance coil 111 are LC resonant circuits and have a function of creating a magnetic field resonant state. While in the present embodiment the capacitor component of each LC resonant circuit is realized by a device, the capacitor component may be realized by stray capacitance as the both ends of the coil are opened. In the LC resonant circuit, f determined by (Formula 1) indicates the resonance frequency, provided that the inductance is L and the capacity of capacitor is C.

$$f=1/(2\pi\sqrt{(LC)}) \quad ... \quad (Formula~1)$$

The resonance frequency is 1MHz in the power-supplying resonance coil 211 and the power-receiving resonance coil 111, because it is necessary to arrange these coils to have the same resonance frequency f which is determined by (Formula 1).

When the resonance frequency of the power-supplying resonance coil 211 and the resonance frequency of the power-receiving resonance coil 111 are arranged to be the same as above, the magnetic field resonant state is created between the power-supplying resonance coil 211 and the power-receiving resonance coil 111. When the magnetic field resonant state is created while the power-supplying resonance coil 211 is in resonance, it is possible to send power from the power-supplying resonance coil 211 to the power-receiving resonance coil 111 in the form of magnetic field energy.

(Coupling Coefficient Measurement Method)

The coupling coefficient $k_{23}$ between the power-supplying resonance coil 211 and the power-receiving resonance coil 111 was measured by using the network analyzer 31 of the coupling coefficient measurement system structured as above, while the magnetic member 17 was provided or not provided and the position of the magnetic member 17 was moved. The coupling coefficient $k_{23}$ is a standard indicating the strength of the coupling between the power-supplying resonance coil 211 and the power-receiving resonance coil 111.

To begin with, insertion loss "S21" was measured for the measurement of the coupling coefficient $k_{23}$. The measurement was done with the assumption that the horizontal axis indicated the frequency output from the output terminal whereas the vertical axis indicated the insertion loss "S21".

When the coupling between the power-supplying coil 212 and the power-supplying resonance coil 211 is strong, the measurement is not precisely done because the coupling state between the power-supplying resonance coil 211 and the power-receiving resonance coil 111 is influenced. On this account, the power-supply-side distance between the power-supplying coil 212 and the power-supplying resonance coil 211 must be maintained at a distance with which the power-supplying resonance coil 211 is sufficiently excited, the magnetic field of the power-supplying resonance coil 211 is generated, and the power-supplying coil 212 and the power-supplying resonance coil 211 are not coupled as much as possible. For similar reasons, the power-receive-side distance between the power-receiving resonance coil 111 and the power-receiving coil 112 must be maintained at a distance with which the power-receiving resonance coil 111 is sufficiently excited, the magnetic field of the power-receiving resonance coil 111 is generated, and the power-receiving resonance coil 111 and the power-receiving coil 112 are not coupled as much as possible.

The insertion loss "S21" indicates a signal passing the input terminal when the signal is input from the output terminal. This insertion loss is represented in decibel and increases when the power transmission efficiency increases. The power transmission efficiency indicates a ratio of the power supplied from the output terminal to the power-supplying resonance coil 211 to the power output to the input terminal. To put it differently, the power transmission efficiency increases when the insertion loss "S21" increases.

In the measured waveform of the insertion loss "S21" measured as above, peaks are separately observed on the low frequency side and on the high frequency side. In regard to these separated peaks, the frequency of the peak on the high frequency side is represented as $f_H$ whereas the frequency of the peak on the low frequency side is represented as $f_L$. Based on this, the coupling coefficient $k_{23}$ is calculated by (Formula 2).

$$k_{23} = (f_H{}^2 - f_L{}^2) / (f_H{}^2 + f_L{}^2) \quad \ldots \quad \text{(Formula 2)}$$

(Coupling Coefficient Measurement Result)

Results of measurement of the coupling coefficient $k_{23}$ in the coupling coefficient measurement system above while the magnetic member 17 was provided or not provided and the position of the magnetic member 17 was moved are shown below.

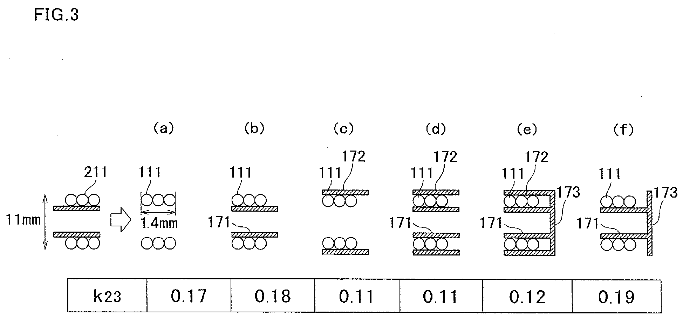

As shown in FIG. 3, when only the power-receiving resonance coil 111 was provided and the magnetic member 17 did not exist as in (a), the coupling coefficient $k_{23}$ was 0.17. In the meanwhile, as shown in FIG. 3, in case of the magnetic member 17 in which the inner cylindrical portion 171 was provided on the inner circumference side of the power-receiving resonance coil 111 as in (b), the coupling coefficient $k_{23}$ was 0.18. As shown in FIG. 3, in case of the magnetic member 17 in which the outer cylindrical portion 172 was provided on the outer circumference side of the power-receiving resonance coil 111 as in (c), the coupling coefficient $k_{23}$ was 0.11.

As shown in FIG. 3, in case of the magnetic member 17 in which the inner cylindrical portion 171 and the outer cylindrical portion 172 were provided on the inner circumference side and the outer circumference side of the power-receiving resonance coil 111, respectively as in (d), the coupling coefficient $k_{23}$ was 0.11. As shown in FIG. 3, in case of the magnetic member 17 in which the inner cylindrical portion 171 and the outer cylindrical portion 172 were provided on the inner circumference side and the outer circumference side of the power-receiving resonance coil 111, respectively, and the disc portion 173 was provided on the other ends of the inner cylindrical portion 171 and the outer cylindrical portion 172 as in (e), the coupling coefficient $k_{23}$ was 0.12. As shown in FIG. 3 , in the magnetic member 17 in which the inner cylindrical portion 171 was provided on the inner circumference side of the power-receiving resonance coil 111 and the disc portion 173 was provided on the other end of the inner cylindrical portion 171 as in (f), the coupling coefficient $k_{23}$ was 0.19.

Based on the measurement results above, it was understood that the coupling coefficient $k_{23}$ could be increased or decreased by the arrangement of the magnetic member 17, without changing the distance between the power-supplying resonance coil 211 and the power-receiving resonance coil 111. To be more specific, it was understood that, while the inner cylindrical portion 171 and the disc portion 173 contributed to the increase in the coupling coefficient $k_{23}$, the outer cylindrical portion 172 contributed to the decrease in the coupling coefficient $k_{23}$. Based on the above, it was understood that the coupling coefficient $k_{23}$ could be increased or decreased by combining at least one of the inner cylindrical portion 171 and the outer cylindrical portion 172 with each other and the disc portion 173 was further combined.

The detailed description of the present invention provided hereinabove mainly focused on characteristics thereof for the purpose of easier understanding; however, the scope of the present invention shall be construed as broadly as possible, encompassing various forms of other possible embodiments, and therefore the present invention shall not be limited to the above description. Further, the terms and phraseology used in the present specification are adopted solely to provide specific illustration of the present invention, and in no case should the scope of the present invention be limited by such terms and phraseology. Further, it will be obvious to those skilled in the art that the other structures, systems, methods and the like are possible, within the spirit of the invention described in the present specification. The description of claims therefore shall encompass structures equivalent to the present invention, unless otherwise such structures are regarded as to depart from the spirit and scope of the present invention. To fully understand the object and effects of the present invention, it is strongly encouraged to sufficiently refer to disclosures of documents already made available.

[Reference Signs List]

1 POWER-RECEIVING DEVICE
2 POWER-SUPPLYING DEVICE
3 POWER-SUPPLYING SYSTEM
11 POWER-RECEIVING MODULE
111 POWER-RECEIVING RESONANCE COIL
112 POWER-RECEIVING COIL
21 POWER-SUPPLYING MODULE
211 POWER-SUPPLYING RESONANCE COIL
212 POWER-SUPPLYING COIL
17 MAGNETIC MEMBER
171 INNER CYLINDRICAL PORTION
172 OUTER CYLINDRICAL PORTION
173 DISC PORTION

**Claims**

1. A power-receiving device comprising:

   a power-receiving resonance coil which receives power by a resonance phenomenon of resonance with a power-supplying module;
   a power-receiving coil configured to receive the power from the power-receiving resonance coil; and
   a magnetic member which at least in part overlaps the power-receiving resonance coil in a radial direction in order to increase or decrease magnetic coupling in the resonance.

2. The power-receiving device according to claim 1, wherein, the magnetic member is provided on an inner circumference side of the power-receiving resonance coil.

3. The power-receiving device according to claim 2, wherein, the power-receiving resonance coil has a coil diameter which is identical with a coil diameter of the power-supplying module and is disposed to oppose the power-supplying module, and the magnetic member is cylindrical in shape and extends along the inner circumferential surface of the power-receiving resonance coil, and a one-end position on the power-supplying module side of the power-receiving resonance coil corresponds to a one-end position of the power-supplying module in a coil axis direction.

4. The power-receiving device according to claim 2, wherein,
   the power-receiving resonance coil has a coil diameter identical with a coil diameter of the power-supplying module and is provided to oppose the power-supplying module,
   the power-receiving coil is provided on a side opposite to the power-supplying module to have a coil axis corresponding to a coil axis of the power-receiving resonance coil, and
   the magnetic member is formed to have a cylindrical shape along inner circumferential surfaces of the power-receiving resonance coil and the power-receiving coil,
   a one-end position on the power-supplying module side of the power-receiving resonance coil corresponds to a one-end position of the power-receiving resonance coil in a coil axis direction, and
   the magnetic member includes: an inner cylindrical portion in which an other-end position which is on a side opposite to the power-supplying module corresponds to an other-end position of the power-receiving coil in the coil axis direction; and a disc portion which is provided at the other end of the cylindrical portion to oppose an other-end face of the power-receiving coil.

5. The power-receiving device according to any one of claims 1 to 4, wherein, to the power-receiving resonance coil, the power is supplied by the resonance phenomenon in which a transmission characteristic of the power supplied to the power-supplying module with respect to a drive frequency is peaked in a drive frequency band lower than a resonance frequency and in a drive frequency band higher than the resonance frequency.

6. The power-receiving device according to any one of claims 1 to 5, further comprising an electronic component which is provided in a magnetic field space formed by the resonance phenomenon to have a lower magnetic field strength than in other parts.

FIG.1

FIG.2

$$k = \frac{f_H{}^2 - f_L{}^2}{f_H{}^2 + f_L{}^2}$$

FIG.3

| k23 | 0.17 | 0.18 | 0.11 | 0.11 | 0.12 | 0.19 |
|------|------|------|------|------|------|------|

## INTERNATIONAL SEARCH REPORT

| International application No. |
| --- |
| PCT/JP2014/053456 |

A. CLASSIFICATION OF SUBJECT MATTER
*H02J17/00*(2006.01)i, *H01F38/14*(2006.01)i

According to International Patent Classification (IPC) or to both national classification and IPC

B. FIELDS SEARCHED

Minimum documentation searched (classification system followed by classification symbols)
H02J17/00, H01F38/14

Documentation searched other than minimum documentation to the extent that such documents are included in the fields searched

| Jitsuyo Shinan Koho | 1922–1996 | Jitsuyo Shinan Toroku Koho | 1996–2014 |
| Kokai Jitsuyo Shinan Koho | 1971–2014 | Toroku Jitsuyo Shinan Koho | 1994–2014 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| X<br>Y | JP 2010-239848 A (Fujitsu Ltd.),<br>21 October 2010 (21.10.2010),<br>paragraphs [0023] to [0025], [0037] to [0051];<br>fig. 1, 2, 5 to 14<br>& US 2010/0244582 A1 | 1-4,6<br>5 |
| Y | JP 2010-239838 A (Fujitsu Ltd.),<br>21 October 2010 (21.10.2010),<br>paragraphs [0046] to [0051]; fig. 5, 6<br>& US 2010/0244839 A1 | 5 |

☐ Further documents are listed in the continuation of Box C.   ☐ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search<br>06 March, 2014 (06.03.14) | Date of mailing of the international search report<br>18 March, 2014 (18.03.14) |
| --- | --- |
| Name and mailing address of the ISA/<br>Japanese Patent Office | Authorized officer |
| Facsimile No. | Telephone No. |

Form PCT/ISA/210 (second sheet) (July 2009)

**REFERENCES CITED IN THE DESCRIPTION**

**Patent documents cited in the description**

- JP 4624768 B
- JP 2010239769 A
- JP 2010239777 A
- JP 2010124522 A